## Europäisches Patentamt

## European Patent Office

## Office européen des brevets

(19)

(11) Veröffentlichungsnummer : **0 199 183**
**B1**

(12) **EUROPÄISCHE PATENTSCHRIFT**

(45) Veröffentlichungstag der Patentschrift :
17.05.89

(21) Anmeldenummer : 86104844.5

(22) Anmeldetag : 09.04.86

(51) Int. Cl.⁴ : **B 60 G   7/04**

(54) **Vorrichtung zur Begrenzung der vertikalen Einfederung eines Achskörpers gegenüber dem Rahmen von Nutzfahrzeugen.**

(30) Priorität : 26.04.85 DE 3515130

(43) Veröffentlichungstag der Anmeldung :
29.10.86 Patentblatt 86/44

(45) Bekanntmachung des Hinweises auf die Patenterteilung : 17.05.89 Patentblatt 89/20

(84) Benannte Vertragsstaaten :
**AT DE FR GB IT NL SE**

(56) Entgegenhaltungen :
**FR—A— 1 073 964**
**US—A— 1 771 309**
**US—A— 2 328 378**
**US—A— 2 611 625**
**US—A— 3 770 077**
**US—A— 4 213 633**

(73) Patentinhaber : **M.A.N. Nutzfahrzeuge GmbH**
**Dachauer Strasse 667 Postfach 50 06 20**
**D-8000 München 50 (DE)**

(72) Erfinder : **Eppinger, Josef**
**Haderunstrasse 22**
**D-8000 München 70 (DE)**

## Beschreibung

Die Erfindung bezieht sich auf die Ausgestaltung und Anordnung eines Gummianschlages zur Begrenzung des vertikalen Federweges eines Nutzfahrzeugachskörpers gegenüber dem Fahrzeugrahmen. Gegenstand der Erfindung ist weiterhin die Art der Befestigung des elastischen Anschlages am Fahrzeugrahmen (US-A-1771309).

Bisher ist es üblich, den elastischen Anschlag für die Achse an der Unterseite des unteren Flansches des U-förmigen Rahmenlängsträgers anzuordnen. Diese Lösung führt dazu, daß bei extremer Beanspruchung die am Rahmenlängsträger anschlagende Achse den unteren Flansch des Rahmenlängsträgers beschädigt, z. B. verbiegt.

Dieser Nachteil wird gemäß einem ersten Aspekt der Erfindung dadurch vermieden, daß der Anschlag unterhalb des Längsträgersteges angeordnet ist, so daß die Kräfte beim Anschlagen der Achse am Anschlag unmittelbar geradelinig in den Längsträgersteg eingeleitet werden. Gemäß einem weiteren Erfindungsmerkmal ist der Gummianschlag so dem Übergangsbereich zwischen Steg und unterem Flansch des Rahmenlängsträgers zugeordnet, daß er sowohl am Steg als auch am Flansch anliegt. Er soll dabei gegenüber dem Rahmenlängsträger sowohl vertikal als auch horizontal festgelegt sein.

Dieser Festlegung dient eine erfindungsgemäße Befestigungsvorrichtung, die aus einem Halteblech, einer Schraube, einem Zentrierkegel und aus einer Mutter besteht. Die dem unterem Flansch des Rahmenlängsträgers zugeordnete Fläche des Gummianschlages ist in Fahrzeuglängsrichtung ballig ausgebildet derart, daß die Scheitellinie der Krümmung in Fahrzeugquerrichtung weist, so daß beim Anziehen der Mutter der Gummianschlag relativ zum Rahmenlängsträger nach oben bewegt wird, bis das Spiel zwischen Gummianschlag und Längsträgerflansch zu beiden Seiten der Scheitellinie beseitigt ist.

Der Halter, vorzugsweise ein Halteblech, ist mit einer oberen Nase versehen, mit der der Halter in einer entsprechenden Nut des Gummianschlages eingreift sowie mit einer unteren umlaufenden Ringnase, mit der der Halter in eine entsprechende Nut des Gummianschlages eingreift. Die obere Nase arretiert den Gummianschlag in vertikaler Richtung, die untere Nase in horizontale Ebene in Längs- und Querrichtung.

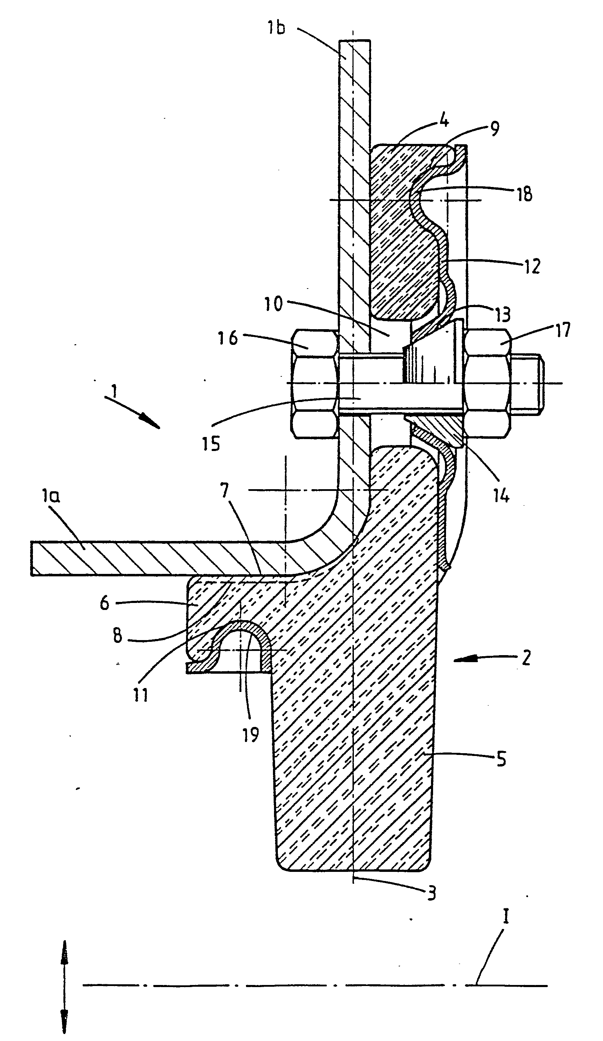

Die für wesentlich erachteten Merkmale der Erfindung ergeben sich aus den Patentansprüchen, die Erfindung ist zum besseren Verständnis nachfolgend anhand der Zeichnung näher erläutert.

Der untere Bereich eines der beiden im Querschnitt U-förmigen Längsträgers eines Lkw-Rahmens ist mit 1 bezeichnet. Im ausgerundeten Übergangsbereich zwischen unterem horizontalem Flansch 1a und vertikalem Steg 1b ist ein Gummianschlag 2 so angeordnet, daß die Wirklinie 3 des am Gummianschlag anschlagenden Achskörpers I gerade und ohne Umlenkung in den Steg 1b gelangt. Der Gummianschlag 2 weist einen oberen vertikalen Flansch 4 auf, mit dem der eingebaute Anschlag an der Außenseite des Steges 1b anliegt, eine untere, mit der Stirnseite dem Achskörper gegenüberliegende, im Querschnitt etwa rechteckige Anschlagleiste 5 und eine horizontale Platte 6, deren Oberseite im entspannten Zustand des Anschlages ballig ist derart, daß die mittlere, in Fahrzeugquerrichtung liegende Scheitellinie 7 an der Unterseite des Flansches 1a bereits anliegt, wenn die in Fahrzeuglängsrichtung vor und hinter der Scheitellinie liegenden Endkanten 8 zu der Flanschunterseite noch beabstandet sind. Im Flansch 4 weist der Puffer eine U-förmige Nut 9 auf, die einen Plattenbereich umschließt, in dem, vom oberen, horizontalen Nutteil und den seitlichen, vertikalen Nutteilen umschlossen, sich ein Befestigungsloch 10 befindet. Eine entsprechende, jedoch in der Horizontalebene U-förmige Nut 11 ist in der horizontalen Platte 6 angeordnet.

Der Befestigung des Anschlages dient ein Halter 12, dessen konische Öffnung 13 einen Zentrierkonus 14 aufnimmt und eine Schraube 15 umschließt, die mit ihrem Kopf 16 an der Innenseite des Steges 1b anliegt und auf deren freies Ende eine Mutter 17 aufgeschraubt ist, die den Zentrierkonus in den Halter 12 und diesen in den Gummianschlag 2, sowie diesen wiederum an den Längsträger 1 anlegt.

Zum Einbau des entspannten Gummianschlages wird an diesen zunächst der Halter 12 angelegt, so daß dessen U-förmige, im Querschnitt etwa halbkreisförmigen Nasen 18, 19 in die Nuten 9, 11 zu liegen kommen. Diese Baugruppe wird nun in der angezeigten Zuordnung zum Längsträger 1 an diesen angelegt, worauf die Schraube 15 durch die Löcher des Steges 1b, des Gummianschlages 2 und des Halters 12 gesteckt wird. Dann werden om freien Ende her der Zentrierkonus 14 auf den Schraubenbolzen aufgesteckt und die Mutter 17 wird aufgeschraubt. Im Anziehen der Mutter 17 wird der Gummianschlag vorgespannt derart, daß die horizontale Platte 6 bis zu den Endkanten 8 an der Unterseite des Flansches 1a angelegt und der Gummianschlag in der gewollten Endposition, durch entsprechendes Nachobenschieben des Gummianschlages infolge des Zusammenwirkens von Nasen 18, 19 und Nuten 9, 11 und veranlaßt durch den Zentrierkonus 14 und den Halter 12, an dem Rahmenlängsträger 1 festgelegt wird.

## Patentansprüche

1. Vorrichtung in einem Nutzfahrzeug, insbesondere Lkw, zur Begrenzung der vertikalen Einfederung eines Achskörpers (I) gegenüber einem im Querschnitt U-förmigen Rahmenlängsträgers (1) mit einem unterhalb desselben angeordneten Gummianschlag, wobei der Steg (1b) des Rahmenlängsträgers (1) vertikal steht und ein unterer Flansch (1a) des Rahmenlängsträgers (1) horizontal liegt, gekennzeichnet durch die Zuordnung des Gummianschlages (2) zum Übergangsbereich zwischen Flansch (1a) und Steg (1b), derart, daß die Anschlagkräfte des Achskörpers (I) durch den Gummianschlag (2) hindurch direkt und ohne seitliche Umlenkung in den Steg (1b) des Rahmenlängsträgers (1) gelangen.

2. Vorrichtung nach Anspruch 1, dadurch gekennzeichnet, daß der Gummianschlag (2) einen vertikalen Flansch (4) zum seitlichen Anlegen an der Außenseite des Längsträgersteges (1b), eine unterhalb des Längsträgersteges befindliche Anschlagleiste (5) und eine horizontale Platte (6) zum Anlegen an der Unterseite des unteren Längsträgerflansches (1a) aufweist.

3. Vorrichtung nach Anspruch 2, dadurch gekennzeichnet, daß der Flansch (4) ein Befestigungsloch (10) aufweist, das ein lösbares Befestigungsmittel (15, 16, 17) zum Festlegen des Gummianschlages (5) am Rahmenlängsträger (1) umschließt.

4. Vorrichtung nach Anspruch 3, dadurch gekennzeichnet, daß das Befestigungsmittel eine Schraubverbindung (15, 16, 17) ist, deren einer Anschlag (Schraubenkopf 16) an der Innenseite des Rahmenlängsträgersteges (1b) und dessen anderer Anschlag (Mutter 17) über einen Halter (12) am Flansch des Gummianschlages (2) anliegt.

5. Vorrichtung nach Anspruch 4, dadurch gekennzeichnet, daß das befestigungsloch (13) des Halters (12) eine konische Begrenzung aufweist, in die der auf den Gummianschlag wirkende Anschlag (17) der Schraubverbindung mit einem Zentrierkonus (14) einwirkt.

6. Vorrichtung nach einem der Ansprüche 4 und 5, dadurch gekennzeichnet, daß der Halter (12) mit einer Führungsnase (18) in eine Nut (9) des Flansches (4) und mit einer weiteren Führungsnase (19) in eine Nut (11) der horizontalen Platte (6) des Gummianschlages (2) eingreift.

7. Vorrichtung nach Anspruch 6, dadurch gekennzeichnet, daß sowohl Führungsnase (18) und Nut (9) im Flanschbereich (4) als auch Führungsnase (19) und Nut (11) in der horizontalen Platte (6) ein U beschrieben, das einmal in einer vertikalen Ebene (Flanschbereich) und zum anderen mal in einer horizontalen Ebene (Plattenbereich liegt), wobei Nasen (18, 19) und Nuten (9,11) etwa halbkreisförmige Querschnitte haben.

8. Vorrichtung nach einem der Ansprüche 1-7, dadurch gekennzeichnet, daß die der Unterseite des Rahmenlängsträgerflansches (1a) zugehörige Oberseite der horizontalen Platte (6) im entspannten Zustand des Gummianschlages (2) ballig ist derart, daß die Scheitellinie (7) der balligen Fläche quer zum Rahmenlängsträger liegt und die Fläche von dieser Scheitellinie aus nach beiden Enden (8) hin symmetrisch bogenförmig abfällt.

9. Verfahren zum Einbau einer Vorrichtung nach den Ansprüchen 1-8, dadurch gekennzeichnet, daß der Gummianschlag (2) spannungslos an dem Rahmenlängsträger (1) angelegt wird und durch Anziehen der Schraubverbindung (15, 16, 17) auf den Gummianschlag (2) eine Vorspannung aufgebracht wird, bis die ballige Oberseite der horizontalen Platte (6) des Gummianschlages zur Gänze an der Unterseite des Rahmenlängsträgerflansches (1a) anliegt.

## Claims

1. Apparatus in a commercial vehicle, in particular a lorry, for limiting the vertical stroke of an axle body (1) with respect to a chassis side member (1) of U-shaped cross-section with a rubber stop located therebelow, whereby the web (1b) of the chassis side member (1) is vertical and a lower flange (1a) of the chassis side member (1) is horizontal, characterised by the association of the rubber stop (2) with the transition region between the flange (1a) and web (1b) so that the impact forces of the axle body (I) pass through the rubber stop (2) directly and without lateral deflection into the web (1b) of the chassis side member (1).

2. Apparatus according to Claim 1, characterised in that the rubber stop (2) has a vertical flange (4) for bearing laterally against the outer side of the side member web (1b), a stop bar (5) located below the side member web and a horizontal plate (6) for bearing against the under side of the lower side member flange (1a).

3. Apparatus according to Claim 2, characterised in that the flange (4) comprises a fastening hole (10), which surrounds a releasable fastener (15, 16, 17) for fixing the rubber stop (5) to the chassis side member (1).

4. Apparatus according to Claim 3, characterised in that the fastener is a screw connection (15, 16, 17), whereof one abutment (screw head 16) bears against the inside of the chassis side member weh (1b) and whereof the other abutment (nut 17) bears by way of a holder (12) against the flange of the rubber stop (2).

5. Apparatus according to Claim 4, characterised in that the fastening hole (13) of the holder (12) comprises a conical boundary, in which the abutment (17) of the screw connection acting on the rubber stop acts with a centering cone (14).

6. Apparatus according to one of Claims 4 and 5, characterised in that the holder (12) engages with a guide lug (18) in a groove (9) of the flange (4) and with a further guide lug (19) in a groove (11) of the horizontal plate (6) of the rubber stop (2).

7. Apparatus according to Claim 6, characterised in that both the guide lug (18) and groove (9) in the flange region (4) as well as the guide lug (19) and groove (11) in the horizontal plate (6) describe a U, which on the one hand lies in a vertical plane (flange region) and on the other hand in a horizontal plane (plate region), whereby lugs (18, 19) and grooves (9, 11) have approximately semi-circular cross-sections.

8. Apparatus according to one of Claims 1 to 7, characterised in that in the relaxed state of the rubber stop (2), the upper side of the horizontal plate (6) associated with the under side of the chassis side member flange (1a) is convex so that the top line (7) of the convex surface is transverse to the chassis side member and the surface drops from this top line towards both ends (8) symmetrically in a curved manner.

9. Method for installing an apparatus according to Claims 1 to 8, characterised in that the rubber stop (2) is applied without tension to the chassis side member (1) and by tightening the screw connection (15, 16, 17), pre-tension is applied to the rubber stop (2) until the convex upper side of the horizontal plate (6) of the rubber stop bears completely against the under side of the chassis side member flange (1a).

**Revendications**

1. Dispositif destiné à un véhicule utilitaire, notamment un poids lourd, pour limiter la compression verticale d'un corps d'essieu (1) vis-à-vis d'un longeron du châssis (1), pourvu d'une section en forme d'U, avec une butée en caoutchouc disposée en-dessous de celui-ci, sur lequel l'aile (1b) du longeron du châssis (1) est orientée verticalement alors qu'une semelle inférieure (1a) du longeron de châssis est orientée horizontalement, caractérisé par l'adjonction de la butée en caoutchouc (2) à la zone de transition entre la semelle (1a) et l'aile (1b) de manière telle que les forces de butée du corps d'essieu (1) sont transmises directement par la butée en caoutchouc (2), et sans déviation latérale, à l'aile (1b) du longeron de châssis (1).

2. Dispositif selon la revendication 1, caractérisé en ce que la butée en caoutchouc (2) présente un rebord (4) vertical pour son application latérale sur la face extérieure de l'aile du longeron (1b), une bande de butée (5) située en-dessous de l'aile du longeron d'une table (6) horizontale pour application sur la face inférieure de la semelle inférieure du longeron (1a).

3. Dispositif selon la revendication 2, caractérisé en ce que le montant (4) présente un trou de fixation (10) qui enserre un moyen de fixation démontable (15, 16, 17) pour assurer le maintien de la butée de caoutchouc (5) contre le longeron du châssis.

4. Dispositif selon la revendication 3, caractérisé en ce que le moyen de fixation est un assemblage par vis (15, 16, 17) dont une des butées (tête de vis (16)) s'appuie sur la face intérieure de l'aile du longeron de châssis (1b) et dont l'autre butée (écrou 17) s'appuie au moyen d'un support (12) sur le rebord de la butée en caoutchouc (2).

5. Dispositif selon la revendication 4, caractérisé en ce que le trou de fixation (13) du support (12) présente une paroi de délimitation cônique, dans laquelle la butée (17) de l'assemblage par vis agissant sur la butée en caoutchouc agit par l'intermédiaire d'un cône de centrage (14).

6. Dispositif selon l'une des revendications 4 et 5, caractérisé en ce que le support (12) est engagé par un talon de guidage (18) dans une gorge (9) du rebord (4) et par un autre talon de guidage (19) dans une gorge (11) de la table horizontale (6) de la butée en caoutchouc (2).

7. Dispositif selon la revendication 6, caractérisé en ce que aussi bien le talon de guidage (18) et la gorge (9) dans la région du rebord (4) que le talon de guidage (19) et la gorge (11) aménagée dans la table horizontale (6) décrivant un U, dont les talons (18, 19) et les gorges (9, 11) ont des sections de forme sensiblement semi-circulaire.

8. Dispositif selon l'une des revendications 1 à 7, caractérisé en ce que la face supérieure de la table horizontale (6) qui est en rapport avec la face inférieure de la semelle du longeron de châssis (1a) est, en l'état détendu de la butée en caoutchouc (2), bombée de manière telle que la ligne de sommet (7) de la surface bombée est disposée transversalement au longeron de châssis et en ce que la surface s'abaisse symétriquement en forme de coude vers les deux extrémités (8) à partir de cette ligne de sommet.

9. Procédé pour le montage d'un dispositif selon les revendications 1 à 8, caractérisé en ce que la butée en caoutchouc (2) est appliquée sans tension contre le longeron de châssis (1) et en ce qu'il est appliqué, par suite du serrage de l'assemblage par vis (15, 16, 17) une précontrainte à la butée en caoutchouc (2), jusqu'à ce que la face supérieure bombée de la table horizontale (6) de la butée en caoutchouc s'appuie en totalité sur la face inférieure de la semelle du longeron de châssis (1a).